(19) Europäisches Patentamt
European Patent Office
Office européen des brevets

(11) EP 3 966 881 B1

(12) EUROPEAN PATENT SPECIFICATION

(45) Date of publication and mention of the grant of the patent:
**18.03.2026 Bulletin 2026/12**

(21) Application number: **20721234.1**

(22) Date of filing: **28.04.2020**

(51) International Patent Classification (IPC):
***H01M 10/052*** *(2010.01)* ***C09C 1/40*** *(2006.01)*
***H01M 50/446*** *(2021.01)* ***H01M 50/451*** *(2021.01)*
***H01M 50/489*** *(2021.01)*

(52) Cooperative Patent Classification (CPC):
**C09C 1/40; C09C 1/407; H01M 10/052; H01M 50/446; H01M 50/451; H01M 50/489;**
C01P 2006/40; Y02E 60/10

(86) International application number:
**PCT/EP2020/061683**

(87) International publication number:
**WO 2020/225018 (12.11.2020 Gazette 2020/46)**

(54) **LITHIUM-ION BATTERY SEPARATOR COATED WITH SURFACE TREATED ALUMINA**

MIT OBERFLÄCHENBEHANDELTEM ALUMINIUMOXID BESCHICHTETER LITHIUM-IONEN-BATTERIESEPARATOR

SÉPARATEUR DE BATTERIE AU LITHIUM REVÊTU D'ALUMINE TRAITÉE EN SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2019 EP 19172990**

(43) Date of publication of application:
**16.03.2022 Bulletin 2022/11**

(73) Proprietor: **Evonik Operations GmbH**
**45128 Essen (DE)**

(72) Inventors:
- **HUANG, Yuan-Chang**
**Taipei City, 10882 (TW)**
- **HSIEH, Ping-Hsun**
**Taoyuan City, 338 (TW)**
- **KIM, Dong-Won**
**Yongin Yongin 16866 (KR)**
- **AHN, Junhwan**
**Seoul 01717 (KR)**
- **LEE, Sangmin**
**Seoul 02861 (KR)**
- **YOU, Tae-Sun**
**Anyang 14102 (KR)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**EP-A1- 2 639 854**
**WO-A1-2014/104687**
**WO-A2-2004/108595**
**US-A1- 2012 301 774**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a separator for a lithium-ion battery, comprising an organic substrate coated with a coating layer comprising a binder and alumina particles, surface treated with a silane of general formula (I) or (Ia), a method for synthesis of the separator and the use thereof in lithium-ion batteries.

Various energy storage technologies have recently attracted much attention of public and have been a subject of intensive research and development at the industry and in the academia. As energy storage technologies are extended to devices such as cellular phones, camcorders and notebook PCs, and further to electric vehicles, demand for high energy density batteries used as a source of power supply of such devices is increasing. Secondary lithium-ion batteries are one of the most important battery types currently used.

The secondary lithium-ion batteries are usually composed of an anode made of a carbon material or a lithium-metal alloy, a cathode made of a lithium-metal oxide, and an electrolyte in which a lithium salt is dissolved in an organic solvent. The separator of the lithium-ion battery provides the passage of lithium ions between the positive and the negative electrode during the charging and the discharging processes.

Safety of lithium-ion batteries is an important issue.

The separator prevents the direct contact between the two electrodes, which would lead to the internal short circuit. Thus, the structure of such separators is considered to be crucial for safety of lithium-ion batteries.

Polyolefin separators, such as those made of polyethylene or polypropylene, are most widely used in lithium-ion batteries because of their good mechanical strength, chemical stability and low cost. However, the usual polyolefin separators may show some serious disadvantages. Because of their high hydrophobicity, polyolefin separators demonstrate rather low wettability by polar electrolytes, which may lead to decreased performance of lithium-ion batteries. Additionally, such polyolefin separators may lose their mechanical stability and undergo shrinkage when exposed to high temperatures.

One possible way to improve the performance of conventional polyolefin separators is to coat such separators with some thermally stable materials, e.g. inorganic particles.

EP 2639854 A1 discloses a separator for a lithium secondary battery comprising a substrate and a coating layer on the surface of the substrate, the coating layer containing metal oxide particles selected from the group consisting of oxides of elements Sn, Ce, Mg, Ni, Ca, Zn, Zr, Y, Al, Ti coated with a silane compound, and a binder. The silane preferably has a reactive substituent comprising an amino group, an isocyanate group, an epoxy group or a mercapto group. Such reactive groups of the silane allow reaction with the binder, preferably containing -COOH or -OH groups.

Safety of the lithium-ion batteries also crucially depend on the type of electrolyte used. Liquid electrolytes, most widely used in lithium-ion batteries currently, are liable to leak and thus may easily cause fire or even explosion if the battery is damaged or exposed to increased temperature. These problems may be solved by using polymer gel electrolytes, which are thus safer than the liquid ones for the use in lithium-ion batteries.

KR20150099648 discloses separator membranes coated with inorganic particles, e.g. Si, Sn, Ge, Cr, Al, Mn, Ni, Zn, Zr, Co, In, Cd, Bi, Pb or V oxides modified with modifying agents with vinyl functional groups capable of polymerization. Particularly, preparation of a polyethylene separator coated with silica particles modified with vinyl groups is described, which can be used in a lithium-ion battery with a gel polymer electrolyte. Modified with vinyl groups colloidal silica particles are prepared by hydrolysis of vinyl trimethoxysilane followed by separation of the precipitate and its drying at 70 °C.

KR20170103049 describes a method for preparing a separator for a lithium-ion battery coated with inorganic particles, comprising the steps of (a) preparing suitable inorganic particle; (b) mixing the inorganic particle with a solvent; (c) immersing a separator film in the mixture of inorganic particles with the solvent and (d) drying the separator film to produce the coated separator film. Particularly, the examples of KR20170103049 show preparation of colloidal silica via hydrolysis of tetraorthosilicate (TEOS), free radical polymerization of styrene in the presence of these silica particles followed by heat treatment at 550 °C to prepare modified silica aggregates, which are then treated with 3-methacryloxypropyl trimethoxysilane. These functionalized silica particles are then used for coating of a separator membrane for a lithium-ion battery.

One problem arising during the repeated charging and discharging the lithium-ion battery is that of forming hydrofluoric acid (HF) as a product of hydrolysis of lithium salts used in the electrolyte of the battery, e.g. $LiPF_6$, by trace amounts of water present in the system. HF may react with the cathode active material of the battery leading to deteriorated long-term performance of the battery. The presence of silica particles in coating layer surrounding separator material, as described in KR20150099648 and KR20170103049, may be disadvantageous because of the possible reaction of HF with $SiO_2$ with formation of gaseous silicon tetrafluoride ($SiF_4$). Any gas formation during the operation of a battery cell is particularly disadvantageous due to the resulting risk of battery disruption or even explosion under pressure of evolving gases.

WO 2014104687 A1 discloses method for producing separators for secondary batteries, comprising a porous polyolefin substrate and an active layer coated on the surface of the substrate. The active layer may contain inorganic particles such as $SiO_2$, $Al_2O_3$, $TiO_2$, $SnO_2$, $CeO_2$, $ZrO_2$, $BaTiO_3$, $Y_2O_3$ and a variety of silane coupling agents. Examples 3

and 4 cite alumina particles with an average particle diameter 400 nm surface treated with 3-aminopropyltriethoxysilane. In these examples, such surface treated alumina particles are coupled (via the present amino groups of the silane coupling agent) with $ZrO_2$ particles, and the resulting $Al_2O_3$-silane-$ZrO_2$ hybrids are coated on the polyethylene separator membrane.

US 20120301774 A1 discloses separators with enhanced anti-oxidation performance including a porous substrate and an active layer containing a mixture of binder such as a variety of silanes or siloxanes, and inorganic particles, such as $SiO_2$, $Al_2O_3$, CaO, $TiO_2$, ZnO, MgO, $ZrO_2$, $SnO_2$. The combination of (meth)acrylsilanes with alumina particles is not disclosed. Examples 2 and 3 disclose preparation of inorganic/organic composite separators, involving treatment of an alumina powder with a solution containing polyacrylic acid-sodium polyacrylate and 3-glycidoxypropyltrimethoxysilane.

The problem addressed by the present invention is that of providing an improved separator for use in a lithium-ion battery and such a battery providing high capacity retention during the charging-discharging process, especially at elevated temperature, without using any silica as a constituent of separator coating.

The invention provides a separator for a lithium-ion as defined in the appended claims.

<u>The coating layer</u>

The inventive separator is coated with a coating layer comprising a binder and a surface treated alumina.

<u>The surface treated alumina</u>

The terms "alumina" and "aluminium oxide" can be used interchangeably in the context of the present invention and relate to alumina particles, e.g. in the form of a powder or granules.

The alumina present in the separator according to the invention is surface treated. This surface treatment, particularly a hydrophobic surface treatment may improve the compatibility of alumina particles with hydrophobic binder and separator material. Surface treated alumina used in the present invention is preferably hydrophobic and has a methanol wettability of a methanol content greater than 5%, preferably of 10% to 80%, more preferably of 15% to 70%, especially preferably of 20% to 65%, most preferably of 25% to 60%, by volume in a methanol/water mixture.

The term "hydrophobic" in the context of the present invention relates to the particles having a low affinity for polar media such as water. The hydrophilic particles, by contrast, have a high affinity for polar media such as water. The hydrophobicity of the hydrophobic materials can typically be achieved by the application of the appropriate nonpolar groups to the surface of particles. The extent of the hydrophobicity of an inorganic oxide such as of hydrophobic alumina can be determined via parameters including its methanol wettability, as described in detail, for example, in WO2011/076518 A1, pages 5-6. In pure water, hydrophobic particles of e.g. alumina separate completely from the water and float on the surface thereof without being wetted with the solvent. In pure methanol, by contrast, hydrophobic particles are distributed throughout the solvent volume; the complete wetting takes place. In the measurement of methanol wettability, a maximum methanol content at which there is still no wetting of the alumina, is determined in a methanol/water test mixture, meaning that 100% of the alumina used remains separate from the test mixture after contact with the test mixture, in unwetted form. This methanol content in the methanol/water mixture in % by volume is called methanol wettability. The higher the level of such methanol wettability, the more hydrophobic the alumina. The lower the methanol wettability, the lower the hydrophobicity and the higher the hydrophilicity of the material.

The separator of the invention, comprises the surface treated alumina, prepared by surface treatment of alumina with a compound of general formula (I) (Ia).

The compound of general formula (I) is selected from the group consisting of 3-(triethoxysilyl)propyl methacrylate (I, R = Me, h = 0, B = $-(CH_2)_3-$, X = OEt), 3-(trimethoxysilyl)propyl methacrylate (I, R = Me, h = 0, B = $-(CH_2)_3-$, X = OMe), 3-(trichlorosilyl)propyl methacrylate (I, R = Me, h = 0, B = $-(CH_2)_3-$, X = Cl), and mixtures thereof.

The compound of general formula (Ia) is selected from the group consisting of (dichlorosilanediyl)bis(propane-3,1-diyl) bis(2-methylacrylate) (Ia, R = $CH_3$, B = $-(CH_2)_3-$, X = Cl), (dimethoxysilanediyl)bis(propane-3,1-diyl) bis(2-methylacrylate) (Ia, R = $CH_3$, B = $-(CH_2)_3-$, X = $OCH_3$), (diethoxysilanediyl)bis(propane-3,1-diyl) bis(2-methylacrylate) (Ia, R = $CH_3$, B = $-(CH_2)_3-$, X = $OC_2H_5$), and mixtures thereof.

The surface treated alumina is preferably fumed alumina.

Fumed alumina is the alumina obtained from pyrogenic processes, e.g. flame hydrolysis or flame pyrolysis. In flame hydrolysis process, aluminium compounds, preferably aluminium chloride, are vaporized and reacted in a flame generated by the reaction of hydrogen and oxygen to form alumina particles. The thus obtained powders are referred to as "pyrogenic" or "fumed" alumina. The reaction initially forms highly disperse primary particles, which in the further course of reaction coalesce to form aggregates. The aggregate dimensions of these powders are generally in the range of 0.2 μm - 1 μm. Said powders may be partially destructed and converted into the nanometre (nm) range particles, advantageous for the present invention, by suitable grinding. Pyrogenically prepared aluminium oxides are characterized by extremely small

particle size, high specific surface area (BET), very high purity, spherical shape of primary particles, and the absence of pores. Preparation of fumed alumina by flame hydrolysis process is described in detail e.g. in DE 19943 291 A1.

The surface treated alumina preferably has a specific surface area (BET) of 30 $m^2/g$ to 200 $m^2/g$, more preferably of 50 $m^2/g$ to 150 $m^2/g$. The specific surface area, also referred to simply as BET surface area, can be determined according to DIN 9277:2014 by nitrogen adsorption in accordance with the Brunauer-Emmett-Teller method.

The surface treated alumina preferably has a carbon content of 0.1% to 15.0%, more preferably of 0.5% to 5.0% by weight. The carbon content may be determined by elemental analysis. The analysed sample is weighed into a ceramic crucible, provided with combustion additives and heated in an induction furnace under an oxygen flow. The carbon present is oxidized to $CO_2$. The amount of $CO_2$ gas is quantified by infrared detectors.

The surface treated alumina preferably has a number mean particle diameter $d_{50}$ of less than 1 $\mu$m, more preferably less than 900 nm, even more preferably 20 nm - 800 nm, still more preferably 30 nm - 700 nm, most preferably 50 nm - 500 nm. The number mean particle diameter can be determined by dynamic light scattering method (DLS). The alumina may be partially or completely in the form of individual primary particles. In the case of fumed alumina, however, the particles are usually mostly in the form of aggregates. In the case of aggregated particles, the number mean particle diameter refers to the size of the aggregates.

The surface treated alumina preferably has a tamped density of 25 g/L to 130 g/L. The tamped density may be determined in accordance with DIN ISO 787/XI and is equal to the quotient of the mass and the volume of a powder after tamping in the tamping volumeter under predetermined conditions.

pH Value of the surface treated alumina is preferably from 3 to 9, more preferably from 4 to 8. The pH value can be determined in a 4 % aqueous dispersion of surface treated fumed alumina in a 1 : 1 (wt% : wt%) water : methanol mixture.

<u>The binder</u>

The coating layer of the inventive separator comprises a binder. The material of the binder is not particularly limited as long as this material allows efficient adhesion between the alumina particles and the surface of the organic substrate. The binder may be selected from the group consisting of poly(vinylidene fluoride), copolymer of vinylidene fluoride and hexafluoropropylene, poly(vinyl acetate), poly(ethylene oxide), poly(methyl methacrylate), poly(ethyl acrylate), poly(vinyl chloride), poly(urethane), poly(acrylonitrile), copolymer of ethylene and vinyl acetate, carboxyl methyl cellulose, poly(imide), and mixtures thereof.

The weight ratio of the binder to the alumina may be from 0.1:99.9 to 99:1, preferably from 1:99 to 90:10. The adhesion between alumina particles and the surface of the organic substrate may be insufficient, if less than 1% by weight of the binder, related to the mixture of the binder and alumina, is employed. With more than 90 % by weight of the binder, the porosity of the coating layer including the binder and alumina, may be decreased.

The thickness of the coating layer is preferably 0.1 $\mu$m - 20 $\mu$m, more preferably 0.1 $\mu$m - 10 $\mu$m.

<u>The organic substrate</u>

The separator according to the invention comprises an organic substrate. The material for such an organic substrate is not particularly limited, as long as it can generally be used as a separator for a battery.

Such organic substrate is usually porous. The porosity of the organic substrate, that is the ratio of total pore volume of a unit of the organic substrate to the total volume of this unit of the organic substrate, is preferably more than 30%, more preferably 30% - 80%. If the porosity of the organic substrate is less than 30%, ion conductivity through the separator membrane may be impeded. If, on the other hand, the porosity of the organic substrate is more than 80%, the mechanical stability of the separator membrane may be insufficient, leading to increased safety issues.

The organic substrate may comprise a polyolefin resin, a fluorinated polyolefin resin, a polyester resin, a polyacrylonitrile resin, a cellulose resin, a non-woven fabric or a mixture thereof. Preferably, the organic substrate comprises a polyolefin resin such as a polyethylene or polypropylene based polymer, a fluorinated resin such as polyvinylidene fluoride polymer or polytetrafluoroethylene, a polyester resin such as polyethylene terephthalate and polybutylene terephthalate, a polyacrylonitrile resin, a cellulose resin, a non-woven fabric or a mixture thereof.

The separator according to the invention preferably has a total thickness of 5 $\mu$m - 200 $\mu$m, more preferably of 5 $\mu$m - 100 $\mu$m.

<u>The process for producing the separator</u>

A process for producing the separator comprises the following steps:

1) preparing a surface treated alumina by surface treatment of alumina with a surface treatment agent;
2) preparing a coating mixture comprising the surface treated alumina and a binder;
3) coating the surface of an organic substrate with the coating mixture to form a coating layer comprising the surface treated alumina and the binder on the surface of the organic substrate.

Step 1) of the inventive process for preparing the inventive separator can be carried out by treating of surface untreated (hydrophilic) alumina with a surface treatment agent.

In this step 1), the untreated alumina is preferably sprayed with a suitable surface treatment agent, at ambient temperature (about 25 °C) and the mixture is subsequently treated thermally at a temperature of 50 °C to 400 °C over a period of 1 to 6 hours.

An alternative method for surface treatment of the alumina in step 1) can be carried out by treating the alumina with a suitable surface treatment agent in vapour form and subsequently treating the mixture thermally at a temperature of 50°C to 800 °C over a period of 0.5 to 6 hours.

The thermal treatment in step 1) can be conducted under protective gas, such as, for example, nitrogen. The surface treatment can be carried out in heatable mixers and dryers with spraying devices, either continuously or batchwise. Suitable devices can be, for example, ploughshare mixers or plate, cyclone, or fluidized bed dryers.

The amount of surface treatment agent used depends on the type of the alumina and of the surface treatment agent applied. However, usually from 1% to 15 %, preferably 2% - 10% by weight of the surface treatment agent related to the amount of the alumina, is employed.

In step 2) of the inventive process for preparing the inventive separator, a mixture comprising the surface treated alumina and a binder and optionally a solvent, is prepared. The weight ratio of the binder to the alumina may be from 1:99 to 99:1, preferably from 10:90 to 90:10. Preferably, the mixture comprising the surface treated alumina and a binder further comprises 1% to 30% by weight, related to the total mixture, of a solvent. The solvent is not particularly limited, as long as it may dissolve the binder. The examples of the suitable solvents are acetone, toluene, ethyl acetate, dichloromethane, chloroform, methanol, ethanol, n-butanol, N-methyl pyrrolidone.

In step 3) of the inventive process for preparing the inventive separator, the surface of an organic substrate is coated with the coating mixture to form a coating layer comprising the surface treated alumina and the binder on the surface of the organic substrate. Any suitable coating method allowing application of a relatively thin coating layer may be applied. An example of a suitable apparat for coating step is doctor blade device SA-202 (manufacturer: Tester Sangyo).

The coating mixture may further be dried or cured on the surface of the organic substrate leading to formation of the final coating layer.

Use of the separator

The invention further provides the use of the separator according to the invention as a constituent of a lithium-ion battery.

The invention provides the use of the inventive separator as a constituent of a lithium-ion battery, wherein the lithium-ion battery comprises a gel electrolyte.

The inventive separator can be used in a process for preparing a lithium-ion battery, containing a gel electrolyte, comprising the following steps:

1) preparing an electrolyte precursor solution comprising a crosslinking agent, an initiator and a liquid electrolyte;
2) assembling a lithium-ion battery comprising the electrolyte precursor solution, the inventive separator, a cathode and an anode.
3) crosslinking the electrolyte precursor solution to prepare the lithium-ion battery comprising the gel electrolyte.

The lithium-ion battery

The invention further provides lithium-ion battery comprising the separator according to the invention.

The lithium-ion battery of the invention, apart from the separator, usually contains a cathode, an anode and an electrolyte comprising a lithium salt.

The cathode of the lithium-ion battery usually includes a current collector and an active cathode material layer formed on the current collector.

The current collector may be a copper foil, a nickel foil, a stainless-steel foil, a titanium foil, a polymer substrate coated with a conductive metal, or a combination thereof.

The active cathode materials include materials capable of reversible intercalating/deintercalating lithium ions and are well known in the art. Such active cathode material may include lithium metal, a lithium alloy, silicon, silicon oxide, silicon carbide composite, silicon alloy, Sn, $SnO_2$, or a transition metal oxide, such as mixed oxides including Li, Ni, Co, Mn, V or other transition metals.

The anode of the lithium-ion battery comprises any suitable material, commonly used in the secondary lithium-ion batteries, capable of reversible intercalating/deintercalating lithium ions. Typical examples thereof are carbonaceous materials including crystalline carbon such as natural or artificial graphite in the form of plate-like, flake, spherical or fibrous type graphite; amorphous carbon, such as soft carbon, hard carbon, mesophase pitch carbide, fired coke and the like, or

mixtures thereof.

The liquid electrolyte of the lithium-ion battery (outside the scope of the claims) may comprise any suitable organic solvent commonly used in the lithium-ion batteries, such as anhydrous ethylene carbonate (EC), dimethyl carbonate (DMC), propylene carbonate, methylethyl carbonate, diethyl carbonate, gamma butyrolactone, dimethoxyethane, fluoroethylene carbonate, vinylethylene carbonate, or a mixture thereof.

The electrolyte of the lithium-ion battery usually contains a lithium salt. Examples of such lithium salts include lithium hexafluorophosphate ($LiPF_6$), lithium bis 2-(trifluoromethylsulfonyl)imide (LiTFSI), lithium perchlorate ($LiClO_4$), lithium tetrafluoroborate ($LiBF_4$), $Li_2SiF_6$, lithium triflate, $LiN(SO_2CF_2CF_3)_2$ and mixtures thereof.

The lithium-ion battery of the present invention comprises a gel electrolyte. The liquid mixture of the lithium salt and the organic solvent, which is not cured, polymerized or cross-linked, is referred to as "liquid electrolyte" in the context of the present invention. The gel or solid mixture comprising a cured, polymerized or cross-linked compound or their mixtures, optionally a solvent, and the lithium salt is referred to as a "gel electrolyte". Such gel electrolytes can be prepared by polymerization or cross-linking of a mixture, containing at least one reactive, i.e. polymerizable or cross-linkable, compound and a lithium salt.

The lithium-ion battery of the present invention comprises a gel electrolyte prepared from a liquid electrolyte precursor solution, comprising a crosslinking agent, an initiator, a lithium salt and a liquid electrolyte, preferably containing reactive i.e. polymerizable or cross-linkable, compounds. Such reactive compounds may include reactive functional groups, such as a double bound of a vinyl group, acrylate or methacrylate group, or combination thereof. An example of such a reactive compound is vinylethylene carbonate.

The crosslinking agent may include two or more reactive functional groups, such as a double bound of a vinyl group, acrylate or methacrylate group, or combination thereof. One example of such a crosslinking agent is tetra(ethylene glycol) diacrylate (TEGDA). The content of the crosslinking agent in the electrolyte precursor solution may be 0.1 % - 10 % by weight, more preferably 0.1 % - 5 % by weight.

The examples of suitable initiators are t-amyl peroxide, benzoyl peroxide, azobis-compounds, such as 2,2'-azobis(isobutyronitrile) (AIBN), or a combination thereof. The inventive lithium-ion battery can be prepared by a process comprising the following steps:

1) preparing an electrolyte precursor solution comprising a crosslinking agent, an initiator and a liquid electrolyte;
2) assembling a lithium-ion battery comprising the electrolyte precursor solution, the inventive separator, a cathode and an anode.
3) crosslinking the electrolyte precursor solution to prepare the lithium-ion battery comprising the gel electrolyte.

## Experimental Part

### Inorganic Particles

### Fumed Alumina 1

Preparation of fumed alumina 1 surface treated with 3-(trimethoxysilyl)propyl methacrylate was carried out according to example 11 of EP 1628916B1. Alumina 1 had a BET of 93 $m^2/g$ and C-content of 4.0 wt. %.

### AEROXIDE® Alu C 805

Fumed alumina surface treated with n-octyl trimethoxysilane:
AEROXIDE® Alu C 805, manufacturer: Evonik Resource Efficiency GmbH. According to the data sheet, AEROXIDE® Alu C 805 had a BET of 75-105 $m^2/g$ and a C-content of 3.5-4.5 wt. %.

### AEROSIL® R 711

Fumed silica surface treated with 3-(trimethoxysilyl)propyl methacrylate:
AEROSIL® R711, manufacturer: Evonik Resource Efficiency GmbH. According to the data sheet, AEROSIL® R711 had a BET of 125-175 $m^2/g$ and a C-content of 4.5-6.5 wt.%.

### Separator

Polyethylene film of 9 μm thickness (manufacturer: SK Innovation).

**Binder**

Copolymer of polyvinylidene fluoride and hexafluoropropylene (Kynar Flex® 2801-00, manufacturer: Arkema).

**Coating of separator: General procedure**

The polyethylene separator film was coated with a mixture of inorganic particles and the binder diluted with N-methyl-2-pyrrolidone as a solvent (inorganic particles :
binder : NMP = 5 : 5 : 90 by weight) using a Doctor blade device SA-202 (manufacturer: Tester Sangyo) to achieve a total thickness of coated polyethylene separator of 15 μm.

**Lithium-ion battery**

The lithium-ion battery with a ratio of designed areal capacity of negative and positive electrode (N/P ratio) = 1.175; areal capacity: 2.0 mAh/$cm^2$, containing an anode electrode and a cathode electrode which were purchased from Bexel in Korea, a separator and an electrolyte, was assembled using the following materials:

Anode electrode: 90 wt% of artificial graphite (loading level: 6.86 mg/$cm^2$) from Showa Denko + 3 wt% of conductive carbon + 7 wt% of PVdF binder KF9130 (Kureha).
Cathode electrode: 95 wt% of NCM 622, $LiNi_{0.6}Co_{0.2}Mn_{0.2}O_2$ (loading level: 12.0 mg/$cm^2$) + 3 wt% of conductive carbon + 2 wt% of PVdF binder KF7208 (Kureha).
Separator: polyethylene film coated with inorganic particles as described above.

Electrolyte:

Liquid electrolyte (LE): A mixture of 100 wt.% of 1.15 M solution of $LiPF_6$ in ethylene carbonate (EC)/ethyl methylcarbonate (EMC)/diethyl carbonate (DEC) (3:5:2 vol:vol:vol) (manufacturer: Panax Etec) with 5 wt.% fluoroethylene carbonate (FEC, manufacturer: Panax Etec) and 1 wt.% vinyl ethylene carbonate (VEC, manufacturer: Panax Etec).
Gel electrolyte (GE): A mixture of 100 wt.% of the above described liquid electrolyte with 6 wt.% tetra(ethylene glycol) diacrylate (TEGDA, manufacturer: Sigma-Aldrich) and 0.06 wt.% of 2,2'-azobis(isobutyronitrile) (AIBN, manufacturer: Sigma-Aldrich).

**Assembly of the lithium-ion battery (coin cells):**

(1) Cut the cathode electrode with 14 mm in diameter, the anode electrode with 16mm in diameter and separator with 18 mm in diameter.
(2) Place the circle shape cathode, anode and separator into the glovebox for assembly.
(3) Prepare a coin cell (CR2032) as coin cell parts, consisting of case, gasket, disk (1 mm in thickness), spring and cap, respectively.
(4) Place the case and cathode electrode with coating side up in the centre.
(5) Use a micro pipette to quantify 40 μL of the gel electrolyte precursor solution or liquid electrolyte and drop it on the cathode electrode well.
(6) Place the separator on the cathode electrode. Prevent forming air bubbles between the cathode electrode and the separator. Use a Teflon forceps to move out bubbles in-between if any are present. In case of coated separator, the coating surface is facing up for contacting anode electrode.
(7) Insert the gasket in the right direction, so that the cathode and anode electrode cannot move.
(8) Use a micro pipette to quantify 40 μL of the gel electrolyte precursor solution or liquid electrolyte, and drop it over the centre of the separator fixed with gasket.
(9) Place the anode electrode with coating surface down, and place the disk, spring and cap parts on the anode copper foil in sequence.
(10) Press the assembled cells by the top face of Teflon forceps to ensure all the parts fit together well, and then use the crimping machine to complete the CR2032 coin cells.
(11) Place the coin cells in 25°C oven for 12 hours as aging process for separator and electrodes to be well wetted with liquid electrolyte or gel electrolyte precursor.
(12) Put coin cells in an oven at 70°C for 2 hours to induce chemical cross-linking of gel electrolyte precursor after aging process.

(13) Remove coin cells from the oven and proceed further tests.

**Lithium-ion battery tests**

**Alternating Current (AC) impedance**

Measurement of AC Impedance was carried out at 25 °C or 55 °C using the AC impedance analyser CHI 660D (manufacturer: CH instruments). The values measured with one coin cell are presented in the following Table 1 and Table 2:

**Table 1: AC impedance at 25 °C**

| Inorganic particles for Separator/GE LIB | No | R711 | C805 | Fumed alumina 1 |
|---|---|---|---|---|
| AC impedance directly after formation of LIB, $R_{tot}$, [Ω] | 20.0 | 17.4 | 20.6 | 16.9 |
| AC impedance after 300 recharge cycles, $R_{tot}$, [Ω] | 105.0 | 88.4 | 108.3 | 84.9 |
| AC impedance increase after 300 cycles, [%] | 525 | 508 | 526 | 502 |

**Table 2: AC impedance at 55 °C**

| Inorganic particles for Separator/GE LIB | No | R711 | C805 | Fumed alumina 1 |
|---|---|---|---|---|
| AC impedance directly after formation of LIB, $R_{tot}$, [Ω] | 14.0 | 15.6 | 14.9 | 15.5 |
| AC impedance after 100 recharge cycles, $R_{tot}$, [Ω] | 79.8 | 80.8 | 79.0 | 72.4 |
| AC impedance increase after 100 cycles, [%] | 570 | 518 | 530 | 467 |

Table 1 and Table 2 show that lithium-ion batteries with the inventive separators coated with surface treated alumina particles demonstrate lower AC impedance increase both after 300 recharge cycles at 25 °C and after 100 cycles at 55 °C, when compared with the same separator without any coating or separators coated with other inorganic particles.

**Cycle performance**

Cycle performance was measured at 25 °C or at 55 °C using battery cycler PEBC 50.2 (manufacturer: PNE solutions) at cut-off voltage of 3.0-4.3 V, charge rate: 0.5 C CC/CV and discharge rate: 0.5 C CC/CV (0.5 C rate corresponds to current density of 1.0 mAh/$cm^2$). At least three to five cells were assembled and tested in each case to ensure the reproducibility of the results. The average values of these tests are presented in the following Table 3 and Table 4:

**Table 3: Cycle performance at 25 °C**

| Inorganic particles for Separator/GE LIB | No | R711 | C805 | Fumed alumina 1 |
|---|---|---|---|---|
| Charge first cycle, [mAh/g] | 167.7 | 167.9 | 168.0 | 167.2 |
| Discharge first cycle, [mAh/g] | 162.5 | 163.5 | 164.3 | 162.9 |
| Efiiciency first cycle, [%] | 96.9 | 97.4 | 97.8 | 97.4 |
| Charge 300$^{th}$ cycle, [mAh/g] | 116.0 | 125.0 | 115.5 | 130.8 |
| Discharge 300$^{th}$ cycle, [mAh/g] | 115.8 | 125.0 | 115.3 | 130.5 |
| Efiiciency 300$^{th}$ cycle, [%] | 99.8 | 100.0 | 99.8 | 99.8 |
| Retention after 300 cycles, [%] | 71.3 | 76.5 | 70.2 | 80.1 |

**Table 4: Cycle performance at 55 °C**

| Inorganic particles for Separator/GE LIB | No | R711 | C805 | Fumed alumina 1 |
|---|---|---|---|---|
| Charge first cycle, [mAh/g] | 177.1 | 167.2 | 168.0 | 166.6 |
| Discharge first cycle, [mAh/g] | 169.4 | 166.8 | 167.4 | 166.4 |
| Efiiciency first cycle, [%] | 95.7 | 99.8 | 99.6 | 99.8 |

(continued)

| Inorganic particles for Separator/GE LIB | No | R711 | C805 | Fumed alumina 1 |
|---|---|---|---|---|
| Charge 100th cycle, [mAh/g] | 124.2 | 122.3 | 123.1 | 130.2 |
| Discharge 100th cycle, [mAh/g] | 123.0 | 122.2 | 122.9 | 129.8 |
| Efiiciency 100th cycle, [%] | 99.0 | 99.9 | 99.8 | 99.7 |
| Retention after 100 cycles, [%] | 72.6 | 73.3 | 73.4 | 78.0 |

Table 3 and Table 4 show that lithium-ion batteries with the inventive separators coated with surface treated alumina particles demonstrate higher retention both after 300 recharge cycles at 25 °C and after 100 cycles at 55 °C, when compared with the same separator without any coating or separators coated with other inorganic particles.

**Hydrofluoric acid (HF) content measurement**

Measurement of the HF content of the mixture of the electrolyte (89.4 wt%), cross-linker (5.7 wt%), initiator (0.1 wt%) and inorganic particles (4.8 wt%) was carried out by acid-base titration with a 0.01 M solution of triethylamine in dimethyl carbonate (DMC) using methyl orange as an indicator, after storage of this mixture at 55°C for 7 days.

**Table 5: HF content**

| Inorganic particles for Separator/GE LIB | No | R711 | Fumed alumina 1 |
|---|---|---|---|
| HF content, [ppm] | 576 | 9104 | 4680 |

The results of HF content measurement (Table 5) show increased HF content in both samples with separators coated with hydrophobic silica and alumina, when compared with non-coated separator, though the system with silica particles shows twice as much HF as the system with alumina particles. Both silica and alumina powders inevitably contain water traces, which lead to partial hydrolysis of $LiPF_6$ in the electrolyte.

## Claims

1. Separator for a lithium-ion battery, wherein the lithium-ion battery comprises a gel electrolyte, comprising an organic substrate coated with a coating layer comprising a binder and a surface treated alumina,

   wherein the surface treated alumina is prepared by surface treatment of alumina with a compound of general formula (I) or (Ia):

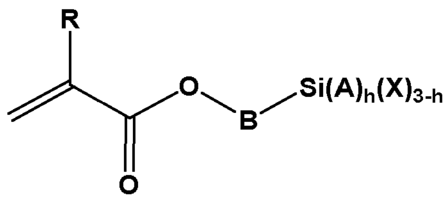

(I)

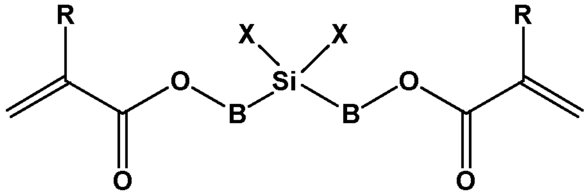

(Ia)

wherein R = H or $CH_3$

$$0 \leq h \leq 2$$

A is H or a branched or unbranched C1 to C4 alkyl residue,
B is a branched or unbranched, aliphatic, aromatic or mixed aliphatic-aromatic C1 to C30 carbon-based group,
X is selected from Cl or a group OY, wherein Y is H or a C1 to C30 branched or unbranched alkyl-, alkenyl-, aryl-, or aralkyl- group, branched or unbranched C2 to C30 alkylether-group or branched or unbranched C2 to C30 alkylpolyether-group or a mixture thereof, wherein the compound of general formula (I) is selected from 3-(triethoxysilyl)propyl methacrylate, 3-(trimethoxysilyl)propyl methacrylate, 3-(trichlorosilyl)propyl methacrylate, and mixtures thereof and the compound of general formula (Ia) is selected from (dichlorosilanediyl) bis(propane-3,1-diyl) bis(2-methylacrylate) (Ia, R = $CH_3$, B = $-(CH_2)_3-$, X = Cl), (dimethoxysilanediyl)bis(propane-3,1-diyl) bis(2-methylacrylate) (Ia, R = $CH_3$, B = $-(CH_2)_3-$, X = $OCH_3$), (diethoxysilanediyl)bis(propane-3,1-diyl) bis(2-methylacrylate) (Ia, R = $CH_3$, B = $-(CH_2)_3-$, X = $OC_2H_5$), and mixtures thereof.

**2.** The separator according to claim 1, wherein the surface treated alumina is fumed alumina.

**3.** The separator according to either of claims 1 to 2, wherein the surface treated alumina has a specific BET surface area of 50 $m^2/g$ - 150 $m^2/g$.

**4.** The separator according to either of claims 1 to 3, wherein the surface treated alumina has a carbon content of 0.5 % - 5.0 % by weight.

**5.** The separator according to either of claims 1 to 4, wherein the surface treated alumina has a number mean particle size $d_{50}$ of 20 nm - 400 nm.

**6.** The separator according to either of claims 1 to 5, wherein the organic substrate comprises a polyolefin resin, a fluorinated polyolefin resin, a polyester resin, a polyacrylonitrile resin, a cellulose resin, a non-woven fabric or a mixture thereof.

**7.** The separator according to either of claims 1 to 6, wherein the binder is selected from the group consisting of poly(vinylidene fluoride), copolymer of vinylidene fluoride and hexafluoropropylene, poly(vinyl acetate), poly(ethylene oxide), poly(methyl methacrylate), poly(ethyl acrylate), poly(vinyl chloride), poly(urethane), poly(acrylonitrile), copolymer of ethylene and vinyl acetate, carboxyl methyl cellulose, poly(imide), and mixtures thereof.

**8.** The separator according to either of claims 1 to 7, wherein the total thickness of the separator is 5 $\mu$m - 200 $\mu$m.

**9.** The separator according to either of claims 1 to 8, wherein the thickness of the coating layer is 0.1 $\mu$m - 20 $\mu$m.

**10.** Lithium-ion battery comprising a gel electrolyte and the separator according to either of claims 1 to 9.

**11.** Process for the preparation of a lithium-ion battery according to claim 10, comprising the following steps:

1) preparing an electrolyte precursor solution comprising a crosslinking agent, an initiator and a liquid electrolyte;
2) assembling a lithium-ion battery comprising the electrolyte precursor solution, the separator according to either of claims 1 to 9, a cathode and an anode.
3) crosslinking the electrolyte precursor solution to prepare the lithium-ion battery comprising the gel electrolyte.

## Patentansprüche

**1.** Separator für eine Lithium-Ionen-Batterie, wobei die Lithium-Ionen-Batterie einen Gelelektrolyt umfasst, der ein organisches Substrat umfasst, das mit einer Beschichtungsschicht beschichtet ist, die ein Bindemittel und ein oberflächenbehandeltes Aluminiumoxid umfasst,

wobei das oberflächenbehandelte Aluminiumoxid durch Oberflächenbehandlung von Aluminiumoxid mit einer Verbindung der allgemeinen Formel (I) oder (Ia) hergestellt wird:

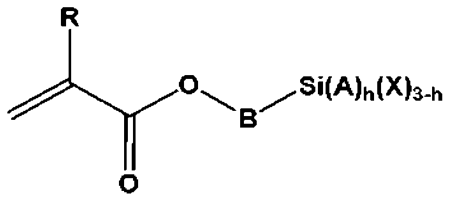

(I)

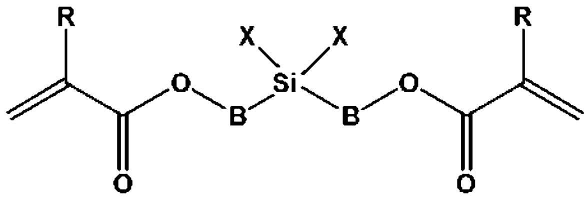

(Ia)

wobei R = H oder $CH_3$

$$0 \leq h \leq 2$$

A für H oder einen verzweigten oder unverzweigten C1- bis C4-Alkylrest steht,
B für eine verzweigte oder unverzweigte, aliphatische, aromatische oder gemischt aliphatisch-aromatische C1- bis C30-Gruppe auf Kohlenstoffbasis steht,
X aus Cl oder einer Gruppe OY ausgewählt ist, wobei Y für H oder eine verzweigte oder unverzweigte C1- bis C30-Alkyl-, Alkenyl-, Aryl- oder Aralkylgruppe, eine verzweigte oder unverzweigte C2- bis C30-Alkylethergruppe oder eine verzweigte oder unverzweigte C2- bis C30-Alkylpolyethergruppe oder eine Mischung davon steht, wobei die Verbindung der allgemeinen Formel (I) aus 3-(Triethoxysilyl)propylmethacrylat, 3-(Trimethoxysilyl)propylmethacrylat, 3-(Trichlorsilyl)methacrylat und Mischungen davon ausgewählt ist und die Verbindung der allgemeinen Formel (Ia) aus (Dichlorsilandiyl)bis(propan-3,1-diyl)bis(2-methylacrylat) (Ia, R = $CH_3$, B = $-(CH_2)_3-$, X = Cl), (Dimethoxysilandiyl)bis(propan-3,1-diyl)bis(2-methylacrylat) (Ia, R = $CH_3$, B = $-(CH_2)_3-$, X = $OCH_3$), (Diethoxysilandiyl)bis(propan-3,1-diyl)bis(2-methylacrylat) (Ia, R = $CH_3$, B = $-(CH_2)_3-$, X = $OC_2H_5$) und Mischungen davon ausgewählt ist.

**2.** Separator nach Anspruch 1, wobei es sich bei dem oberflächenbehandelten Aluminiumoxid um pyrogenes Aluminiumoxid handelt.

**3.** Separator nach einem der Ansprüche 1 bis 2, wobei das oberflächenbehandelte Aluminiumoxid eine spezifische BET-Oberfläche von 50 $m^2/g$ - 150 $m^2/g$ aufweist.

**4.** Separator nach einem der Ansprüche 1 bis 3, wobei das oberflächenbehandelte Aluminiumoxid einen Kohlenstoffgehalt von 0,5 - 5,0 Gew.-% aufweist.

**5.** Separator nach einem der Ansprüche 1 bis 4, wobei das oberflächenbehandelte Aluminiumoxid eine zahlenmittlere Teilchengröße $d_{50}$ von 20 nm - 400 nm aufweist.

**6.** Separator nach einem der Ansprüche 1 bis 5, wobei das organische Substrat ein Polyolefinharz, ein fluoriertes Polyolefinharz, ein Polyesterharz, ein Polyacrylnitrilharz, ein Celluloseharz, einen Vliesstoff oder eine Mischung davon umfasst.

**7.** Separator nach einem der Ansprüche 1 bis 6, wobei das Bindemittel aus der Gruppe bestehend aus Poly(vinylidenfluorid), Copolymer von Vinylidenfluorid und Hexafluorpropylen, Poly(vinylacetat), Poly(ethylenoxid), Poly(methylmethacrylat), Poly(ethylacrylat), Poly(vinylchlorid), Poly(urethan), Poly(acrylnitril), Copolymer von Ethylen und Vinylacetat, Carboxylmethylcellulose, Poly(imid) und Mischungen davon ausgewählt ist.

**8.** Separator nach einem der Ansprüche 1 bis 7, wobei die Gesamtdicke des Separators 5 μm - 200 μm beträgt.

**9.** Separator nach einem der Ansprüche 1 bis 8, wobei die Dicke der Beschichtungsschicht 0,1 μm - 20 μm beträgt.

**10.** Lithium-Ionen-Batterie, umfassend einen Gelelektrolyt und den Separator nach einem der Ansprüche 1 bis 9.

**11.** Verfahren zur Herstellung einer Lithium-Ionen-Batterie nach Anspruch 10, umfassend die folgenden Schritte:

1) Herstellen einer Elektrolytvorläuferlösung, die ein Vernetzungsmittel, einen Initiator und einen flüssigen Elektrolyt umfasst;
2) Zusammenbauen einer Lithium-Ionen-Batterie, die die Elektrolytvorläuferlösung, den Separator nach einem der Ansprüche 1 bis 9, eine Kathode und eine Anode umfasst;
3) Vernetzen der Elektrolytvorläuferlösung zur Herstellung der Lithium-Ionen-Batterie, die den Gelelektrolyt umfasst.

## Revendications

**1.** Séparateur pour une batterie lithium-ion, dans lequel la batterie lithium-ion comprend un électrolyte en gel, comprenant un substrat organique revêtu par une couche de revêtement comprenant un liant et une alumine traitée en surface,

dans lequel l'alumine traitée en surface est préparée par traitement de surface d'alumine avec un composé de formule générale (I) ou (Ia) :

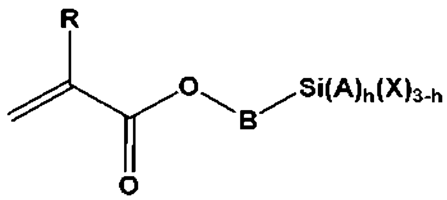

(I)

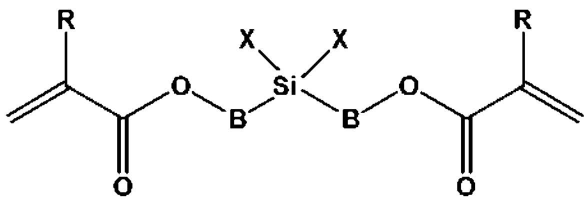

(Ia)

dans laquelle R = H ou $CH_3$

$$0 \leq h \leq 2$$

A est H ou un radical alkyle en C1 à C4 ramifié ou non ramifié,
B est un groupe à base de carbone aliphatique, aromatique ou mixte aliphatique-aromatique, ramifié ou non ramifié, en C1 à C30,
X est choisi parmi Cl ou un groupe OY, dans lequel Y est H ou un groupe alkyle, alcényle, aryle, ou aralkyle, en C1 à C30 ramifié ou non ramifié, un groupe éther d'alkyle en C2 à C30 ramifié ou non ramifié ou un groupe alkylpolyéther en C2 à C30 ramifié ou non ramifié ou un mélange de ceux-ci, le composé de formule générale (I) étant choisi parmi le méthacrylate de 3-(triéthoxysilyl)propyle, le méthacrylate de 3-(triméthoxysilyl)propyle, le méthacrylate de 3-(trichlorosilyl)propyle, et leurs mélanges et le composé de formule générale (Ia) étant choisi parmi le bis(2-méthylacrylate) de (dichlorosilanediyl)bis(propane-3,1-diyle) (Ia, R = $CH_3$, B = $-(CH_2)_3-$, X = Cl), bis(2-méthylacrylate) de (diméthoxysilanediyl)bis(propane-3,1-diyle) (Ia, R = $CH_3$, B = $-(CH_2)_3-$, X = $OCH_3$), bis(2-méthylacrylate) de (diéthoxysilanediyl)bis(propane-3,1-diyle) (Ia, R = $CH_3$, B = $-(CH_2)_3-$, X = $OC_2H_5$) et

leurs mélanges.

2. Séparateur selon la revendication 1, dans lequel l'alumine traitée en surface est de l'alumine pyrogénée.

3. Séparateur selon l'une quelconque des revendications 1 à 2, dans lequel l'alumine traitée en surface a une surface spécifique BET de 50 $m^2/g$ - 150 $m^2/g$.

4. Séparateur selon l'une quelconque des revendications 1 à 3, dans lequel l'alumine traitée en surface a une teneur en carbone de 0,5 % à 5,0 % en poids.

5. Séparateur selon l'une quelconque des revendications 1 à 4, dans lequel l'alumine traitée en surface a une taille moyenne de particules en nombre $d_{50}$ de 20 nm à 400 nm.

6. Séparateur selon l'une quelconque des revendications 1 à 5, dans lequel le substrat organique comprend une résine de polyoléfine, une résine de polyoléfine fluorée, une résine de polyester, une résine de polyacrylonitrile, une résine de cellulose, un tissu non tissé ou un mélange de ceux-ci.

7. Séparateur selon l'une ou l'autre des revendications 1 à 6, le liant étant choisi dans le groupe constitué de poly(fluorure de vinylidène), de copolymère de fluorure de vinylidène et d'hexafluoropropylène, de poly(acétate de vinyle), de poly(oxyde d'éthylène), de poly(méthacrylate de méthyle), de poly(acrylate d'éthyle), de poly(chlorure de vinyle), de poly(uréthane), de poly(acrylonitrile), de copolymère d'éthylène et d'acétate de vinyle, de carboxyméthylcellulose, de poly(imide) et leurs mélanges.

8. Séparateur selon l'une quelconque des revendications 1 à 7, dans lequel l'épaisseur totale du séparateur est de 5 $\mu$m à 200 $\mu$m.

9. Séparateur selon l'une quelconque des revendications 1 à 8, dans lequel l'épaisseur de la couche de revêtement est de 0,1 $\mu$m à 20 $\mu$m.

10. Batterie lithium-ion comprenant un électrolyte en gel et le séparateur selon l'une des revendications 1 à 9.

11. Procédé de préparation d'une batterie lithium-ion selon la revendication 10, comprenant les étapes suivantes :

1) préparation d'une solution de précurseur d'électrolyte comprenant un agent de réticulation, un initiateur et un électrolyte liquide ;
2) assemblage d'une batterie lithium-ion comprenant la solution de précurseur d'électrolyte, le séparateur selon l'une des revendications 1 à 9, une cathode et une anode.
3) la réticulation de la solution de précurseur d'électrolyte pour préparer la batterie lithium-ion comprenant l'électrolyte en gel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2639854 A1
- KR 20150099648
- KR 20170103049
- WO 2014104687 A1
- US 20120301774 A1
- WO 2011076518 A1
- DE 19943291 A1
- EP 1628916 B1